# EUROPÄISCHE PATENTSCHRIFT

(11) **EP 3 074 827 B1**
(45) Veröffentlichungstag und Bekanntmachung des Hinweises auf die Patenterteilung: **21.08.2019**
(21) Anmeldenummer: 14781849.6
(22) Anmeldetag: 02.10.2014
(51) Int. Cl.: G05B 19/418, G05B 19/042, H04W 4/80

(54) **VEREINFACHTER AUSTAUSCH VON FELDGERÄTEN EINER PROZESSEINRICHTUNG**
SIMPLIFIED FIELD DEVICE EXCHANGE IN A PROCESS FACILITY
REMPLACEMENT SIMPLIFIÉ D'APPAREILS DE TERRAIN D'UNE INSTALLATION

(30) Priorität: 25.11.2013 DE 102013223978
(43) Veröffentlichungstag der Anmeldung: 05.10.2016
(73) Patentinhaber: Robert Bosch GmbH, 70442 Stuttgart (DE)
(72) Erfinder: BURGER-SCHEIDLIN, Christoph, 85622 Weissenfeld (DE); BARISIC, Daniel, 85540 Haar (DE); GRUBER, Tobias, 81825 Muenchen (DE); PFEFFERSEDER, Anton, 82054 Sauerlach (DE); ALJAZZAR, Husain, 72827 Wannweil (DE); STEGEMANN, Dirk, 81927 Muenchen (DE)
(86) Internationale Anmeldenummer: PCT/EP2014/071140
(87) Internationale Veröffentlichungsnummer: WO 2015/074795

(56) Entgegenhaltungen:
- DE-A1-102007 014 369
- DE-A1-102007 026 678
- DE-A1-102011 051 212
- DE-A1-102011 089 346
- DE-A1-102012 202 594
- US-A1- 2007 250 180

## Beschreibung

Die vorliegende Erfindung betrifft ein Verfahren zum Betreiben einer Prozesseinrichtung, eine Prozesseinrichtung sowie eine Steuereinheit, ein Feldgerät und einen Austauschsignalgeber für eine derartige Prozesseinrichtung und ein Computerprogramm.

### Stand der Technik

Prozesseinrichtungen, wie z.B. Brand- oder Einbruchmeldeanlagen, bestehen in der Regel aus einer oder auch mehreren, oft dezentralen Steuereinheiten sowie mehreren, verteilten Feldgeräten, wie z.B. Sensoren und/oder Aktuatoren. Es kann aufgrund einer Vielzahl von Gründen notwendig sein, eines der Feldgeräte auszutauschen, z.B. weil ein Feldgerät defekt ist.

Aus der DE 101 27 057 A1 ist eine Gefahrenmeldezentrale bekannt, die aus Modulen aufgebaut ist, wobei die Module über einen Bus verbunden sind. Dabei können die Module während des Betriebs der Gefahrenmeldezentrale eingesetzt und/oder ausgebaut werden. Gemäß der DE 101 27 057 A1 ist vorgesehen, dass beim Herausnehmen eines Moduls während des Betriebs beispielsweise Überwachungsschaltungen sicherstellen, dass es zu keinen Überspannungen kommt. Wird hingegen ein Modul eingesetzt, ist gemäß der DE 101 27 057 A1 vorgesehen, dass sich das Modul bei der Gefahrenzentrale anmeldet.

Das physikalische Entfernen eines Feldgeräts führt in der Regel dazu, dass die das Feldgerät enthaltende Prozesseinrichtung eine Störungsmeldung erzeugt und anzeigt. Weiterhin kann es aufgrund der elektrischen Verkabelung der Steuereinheiten und der Feldgeräte dazu kommen, dass das Entfernen eines einzelnen Feldgeräts mehrere andere Feldgeräte von ihrer elektrischen Energieversorgung trennt. Dies kann z.B. bei einer Feldbusverkabelung der Fall sein.

Es ist bekannt, vor dem Austausch eines Feldgeräts die Prozesseinrichtung oder zumindest einzelne Komponenten (z.B. einen einzelnen Feldbus) komplett abzuschalten oder in einen gesonderten Wartungsmodus zu versetzen, in welchem keine Störungsmeldung bei einem fehlenden Feldgerät erzeugt und angezeigt wird. Dies hat zur Folge, dass die abgeschalteten Komponenten, wie z.B. einzelne Feldgeräte der Prozesseinrichtung, nicht mehr ihre ursprüngliche Funktion erfüllen.

Wenn ein defektes Feldgerät durch ein neues, funktionsfähiges Feldgerät ersetzt wurde, muss das neue Feldgerät mit der Prozesseinrichtung verbunden und anschließend konfiguriert werden. Dies erfolgt manuell oder automatisch, wenn z.B. ein baugleiches Feldgerät eingesetzt wird und alle Feldgeräte bei Inbetriebnahme durch die Steuereinheit konfiguriert werden und keine Erstinbetriebnahme der Feldgeräte erforderlich ist.

Aus der DE 10 2007 014 369 A1 ist eine Schaltungsanordnung und ein Verfahren zur Spiegelung von Parametersätzen für Betriebsgeräte von digital gesteuerten Beleuchtungsanlagen für den Fall von Defekten bekannt.

Es besteht daher Bedarf daran, den Aufwand im Falle eines Austausches eines Feldgeräts einer Prozesseinrichtung zu reduzieren.

### Offenbarung der Erfindung

Vor diesem Hintergrund schlägt die vorliegende Erfindung ein Verfahren zum Betreiben einer Prozesseinrichtung, eine Anordnung aus einem Austauschsignalgeber und einer Prozesseinrichtung sowie ein Computerprogramm mit den Merkmalen der unabhängigen Patentansprüche vor.

### Vorteile der Erfindung

Ein wesentlicher Aspekt der vorliegenden Erfindung besteht darin, dass ein Austauschsignal mittels eines Austauschsignalgebers erzeugt und das Austauschsignal zu der Steuereinheit übertragen wird, wenn ein auszutauschendes Feldgerät durch ein anderes, einzusetzendes Feldgerät ersetzt wird.

Hierdurch kann die Prozesseinrichtung einen bevorstehenden Austausch von einem Feldgerät erfassen. Daraufhin kann die Prozesseinrichtung selbsttätig das auszutauschende Feldgerät von z.B. einem Feldbus trennen, der die Steuereinheit und die Feldgeräte daten- und/oder signalübertragend miteinander verbindet. So kann die Prozesseinrichtung nur teilweise deaktiviert werden, indem lediglich die betroffenen Komponenten der Prozesseinrichtung stillgelegt werden, während die anderen Komponenten der Prozesseinrichtung aktiv bleiben. Dies erlaubt es, Feldgeräte, wie z.B. Aktuatoren und/oder Sensoren, im laufenden Betrieb einer Prozesseinrichtung auszutauschen, ohne das hierzu die gesamte Prozesseinrichtung deaktiviert werden müsste. Außerdem ist es nicht erforderlich, die gesamte Prozesseinrichtung in einen Zustand zu versetzen, in dem sie ihre eigentliche Aufgabe nicht erfüllen kann. Somit ist der Aufwand im Falle eines Austauschs eines Feldgeräts reduziert.

Gemäß einer Ausführungsform wird ein Identifikationsmerkmal des auszutauschenden Feldgeräts erfasst, und auf Erfassen des Identifikationsmerkmals hin das Austauschsignal erzeugt. Hierdurch wird erreicht, dass auf besonders einfache Weise eine Identifikation des auszutauschenden Feldgeräts anhand des dem Feldgerät zugeordneten Identifikationsmerkmals erreicht wird.

Gemäß einer weiteren Ausführungsform weist das auszutauschende Feldgerät einen Sensor auf, mit dem das Austauschsignal erfasst wird. Hierdurch wird erreicht, dass mit dem Sensor eine Annäherung oder Berührung des Austauschsignalgebers an das auszutauschende Feldgerät einfach erfasst werden kann. Durch Auswerten des Austauschsignals ist eine einfache Identifikation des auszutauschenden Feldgeräts möglich. Z.B. kann vorgesehen sein, dass das Feldgerät und Austauschgerät miteinander bidirektional kommunizieren, z.B. gemäß Nahfeldkommunikation (Near Field Communication - NFC) und auf die erfolgte Kommunikation hin ein Austauschsignal erzeugt wird, dass dann mit dem Sensor erfasst wird.

Gemäß einer weiteren Ausführungsform wird das Austauschsignal von dem Austauschsignalgeber zu dem auszutauschenden Feldgerät übertragen, und von dem auszutauschenden Feldgerät zu der Steuereinheit übertragen. Hierdurch wird erreicht, dass keine zusätzlichen Datenverbindungen zur Übertragung des Austauschsignals nötig sind, sondern bereits existierende Datenverbindungen, die das auszutauschende Feldgerät mit der Steuereinheit datenübertragend verbinden, zur Übertragung des Austauschsignals zu der Steuereinheit verwendet werden können. Auch hier kann vorgesehen sein, dass das Feldgerät und Austauschgerät miteinander bidirektional kommunizieren, z.B. gemäß Nahfeldkommunikation (Near Field Communication - NFC) und auf die erfolgte Kommunikation hin ein Austauschsignal erzeugt und übertragen wird.

Gemäß einer weiteren Ausführungsform wird auf Vorliegen des Austauschsignals hin ein Identifikations-Datensatz des auszutauschenden Feldgeräts zu der Steuereinheit übertragen. Hierdurch wird erreicht, dass der Steuereinheit Informationen über das auszutauschende Feldgerät zu Verfügung stehen, um einen sicheren Austausch des auszutauschenden Feldgerätes sicherzustellen.

Gemäß einer weiteren Ausführungsform wird auf Vorliegen zumindest des Austauschsignals hin ein Feedback-Signal erzeugt. Hierdurch wird erreicht, dass eine Rückmeldung über die bereits erfolgreich abgeschlossenen Schritte vorliegt und somit sichergestellt ist, dass ohne Funktionsbeeinträchtigung der Prozesseinrichtung mit dem Verfahren fortgefahren werden kann. Hierzu kann das Feedback-Signal z.B. von der Steuereinheit an das auszutauschende Feldgerät weitergeleitet werden. Ferner kann vorgesehen sein, das Feedback-Signal nur dann zu erzeugen, wenn neben dem Austauschsignal erfasst wurde, dass der Identifikations-Datensatz des austauschenden Feldgeräts zu der Steuereinheit übertragen wurde.

Gemäß einer weiteren Ausführungsform wird ein Konfigurations-Datensatz aus einem Speicher des auszutauschenden Feldgeräts ausgelesen und in einem Speicher der Steuereinheit oder in einem Speicher des Austauschsignalgebers zwischengespeichert. Hierdurch wird erreicht, dass die Konfigurationsdaten des auszutauschenden Feldgeräts zum Konfigurieren des einzusetzenden, neuen Feldgeräts verwendet werden können.

Gemäß einer weiteren Ausführungsform wird auf Vorliegen des Identifikations-Datensatzes hin zumindest durch ein Trennelement die Datenaustauschverbindung aufgetrennt. Die Datenaustauschverbindung kann zusätzlich zur Versorgung der Feldgeräte mit elektrischer Energie ausgebildet sein. Hierdurch wird erreicht, dass das auszutauschende Feldgerät von der Prozesseinrichtung ohne negative Beeinflussung der Prozesseinrichtung von dieser getrennt werden kann. Wenn die Datenaustauschverbindung zusätzlich zur Versorgung der Feldgeräte mit elektrischer Energie ausgebildet ist, wird das Feldgerät auch von seiner Energieversorgung getrennt.

Gemäß einer weiteren Ausführungsform wird ein Vorbereitungsabschluss-Signal erzeugt, wenn die Prozesseinrichtung auf ein Ersetzen des auszutauschenden Feldgeräts durch das einzusetzende Feldgerät vorbereitet ist. Dies ist z.B. der Fall, wenn das Austauschsignal vorliegt, und/oder der Identifikations-Datensatz des auszutauschenden Feldgeräts zur Steuereinheit übertragen wurde, und/oder das Feedback-Signal vorliegt, und/oder der Konfigurations-Datensatz des auszutauschenden Feldgeräts in dem Speicher der Steuereinheit oder des Austauschsignalgebers zwischengespeichert ist. Hierdurch wird erreicht, dass eine Rückmeldung über die bereits erfolgreich abgeschlossenen Schritte vorliegt und somit sichergestellt ist, dass ohne Funktionsbeeinträchtigung der Prozesseinrichtung mit dem Verfahren fortgefahren werden kann, nämlich dem eigentlichen Austausch der Feldgeräte.

Gemäß einer weiteren Ausführungsform wird ein Austausch des auszutauschenden Feldgeräts durch das andere, einzusetzende Feldgerät erfasst und daraufhin eine Mitteilung erzeugt, und auf die Mitteilung hin die aufgetrennte Datenaustauschverbindung wieder datenübertragend verbunden. Hierdurch wird erreicht, dass eine Mitteilung über die bereits erfolgreich abgeschlossenen Schritte vorliegt und somit sichergestellt ist, dass ohne Funktionsbeeinträchtigung der Prozesseinrichtung mit dem Verfahren fortgefahren werden kann, da aufgrund der Mitteilung sichergestellt ist, dass ein Austausch der Feldgeräte erfolgt ist. Dabei kann ein Austausch von Feldgeräten z.B. dadurch erfasst werden, dass die Steuereinheit in Intervallen überprüft, welche Feldgeräte mit der Steuereinheit verbunden sind, z.B. durch Aussenden von entsprechenden Testsignalen auf einem Bus, die von den angeschlossenen Feldgeräte beantwortet oder zurückgeschickt werden.

Weitere Aspekte betreffen eine Prozesseinrichtung mit einer Steuereinheit und zumindest einem mit der Steuereinheit zum Datenaustausch mittels einer Datenaustauschverbindung verbundenen Feldgerät, wobei das Feldgerät im Zusammenwirken mit einem Austauschsignalgeber zum Erzeugen eines Austauschsignals mittels des Austauschsignalgebers und Übertragen des Austauschsignals zu der Steuereinheit ausgebildet ist, sowie eine Steuereinheit, ein Feldgerät und einen Austauschsignalgeber für eine derartige Prozesseinrichtung. Insbesondere handelt es sich bei der Prozesseinrichtung um eine Brand- und/oder Einbruchmeldeanlagen. Vorzugsweise wird eine eine oder auch mehrere dezentrale Steuereinheiten verwendet. Die Feldgeräte sind insbesondere als Sensoren und/oder Aktuatoren ausgebildet.

Auch eine Implementierung des Verfahrens in Form eines Computerprogramms ist vorteilhaft, da dies besonders geringe Kosten verursacht, insbesondere wenn die ausführende Prozesseinrichtung noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich. Dabei kann das Computerprogramm Bestandteile aufweisen, die zum Betrieb der Steuereinheit, der Feldgeräte und des Austauschsignalgebers gemäß dem Verfahren ausgebildet sind.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Kurze Beschreibung der Zeichnungen

- Figur 1: zeigt eine Prozesseinrichtung in schematischer Darstellung,
- Figur 2: zeigt ein Feldgerät gemäß einem ersten Ausführungsbeispiel in schematischer Darstellung,
- Figur 3: zeigt ein Feldgerät gemäß einem zweiten Ausführungsbeispiel in schematischer Darstellung,
- Figur 4: zeigt einen Austauschsignalgeber in schematischer Darstellung, und
- Figur 5: zeigt einen Verfahrensablauf in schematischer Darstellung.

### Ausführungsform(en) der Erfindung

In den Figuren sind gleiche oder einander entsprechende Elemente mit gleichen Bezugszeichen angegeben. Auf eine wiederholte Erläuterung wird verzichtet.

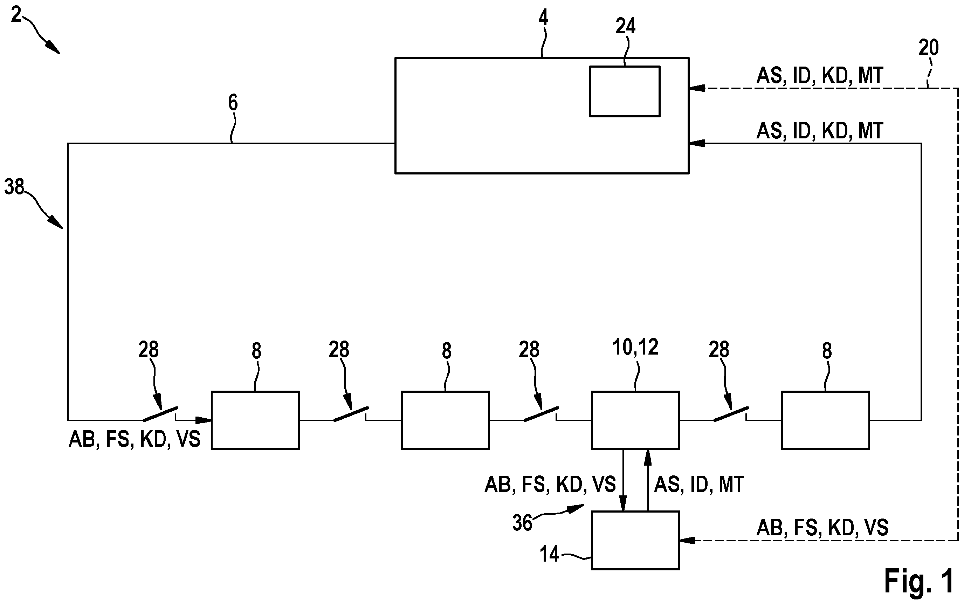

In Figur 1 sind eine Prozesseinrichtung 2 mit einer Steuereinheit 4 und einer Mehrzahl von Feldgeräten 8, 10, 12 sowie ein Austauschsignalgeber 14 zusammenwirkend mit der Prozesseinrichtung 2 schematisch dargestellt.

Im vorliegenden Ausführungsbeispiel ist die Prozesseinrichtung 2 als Brandmeldeanlage ausgebildet, wobei gemäß dem vorliegenden Ausführungsbeispiel die Feldgeräte 8, 10, 12 als Kohlenmonoxidsensoren ausgebildet sind.

Die Steuereinheit 4 und die Feldgeräte 8, 10, 12 sind durch einen Feldbus 38 in Ringform zum Datenaustausch miteinander verbunden. Hier ist gemäß dem vorliegenden Ausführungsbeispiel eine Datenaustauschverbindung 6 vorgesehen, die die Steuereinheit 4 und die Feldgeräte 8, 10, 12 miteinander datenübertragend verbindet. Im vorliegenden Ausführungsbeispiel ist die Datenaustauschverbindung 6 drahtgebunden ausgebildet. Jedoch kann die Datenaustauschverbindung 6 auch drahtlos oder lichtwellenleitergebunden ausgebildet sein. Somit ermöglicht die Datenaustauschverbindung 6 eine Übertragung von Daten und Signalen, wie später erläutert wird.

Der Datenaustauschverbindung 6 sind Trennelemente 28 zugeordnet, mit denen die Datenaustauschverbindung 6 aufgetrennt werden kann, so dass ein Datenaustausch über die Datenaustauschverbindung 6 unterbrochen werden kann. Die Datenaustauschverbindung 6 kann zusätzlich zur Versorgung der Feldgeräte 8, 10, 12 mit elektrischer Energie ausgebildet sein. Die Trennelemente 28 sind über Steuerleitungen (nicht dargestellt) mit der Steuereinheit 4 derart verbunden, dass durch die Steuereinheit 4 jeweils eines der Trennelemente 28 geöffnet oder geschlossen werden kann. Zusätzlich oder alternativ können die Trennelemente 28 von den Feldgeräten 8, 10, 12 durch Ansteuerung geöffnet oder geschlossen werden.

Die Steuereinheit 4 weist gemäß dem vorliegenden Ausführungsbeispiel einen Speicher 24 auf, in dem je ein Konfigurations-Datensatz KD für jedes der Feldgeräte 8, 10, 12 abgespeichert werden kann, mit dem das jeweilige Feldgerät 8, 10, 12 in dem Feldbus 38 konfiguriert werden kann.

In dem in Figur 1 dargestellten Szenario handelt es sich bei den Feldgeräten 8 um funktionsfähige Feldgeräte 8, während das Feldgerät 10 ausgetauscht werden soll. Der Grund hierfür kann sein, dass das auszutauschende Feldgerät 10 defekt ist, dass das auszutauschende Feldgerät 10 geeicht werden soll, oder dass das auszutauschende Feldgerät 10 eine erhöhte Ausfallgefahr aufweist. Das auszutauschende Feldgerät 10 soll durch ein anderes, einzusetzendes Feldgerät 12 ersetzt werden.

Daher ist ein Austauschsignalgeber 14 an das auszutauschende Feldgerät 10 angenähert. Der Austauschsignalgeber 14 ist dazu ausgebildet, ein Austauschsignal
AS zu erzeugen, das dann, wie später noch erläutert wird, zu der Steuereinheit 4 übertragen werden kann.

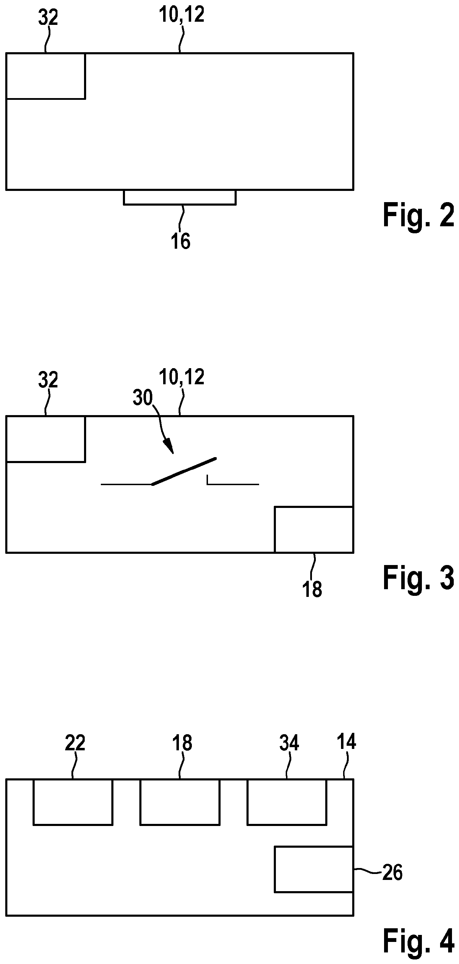

In Figur 2 ist ein erstes Ausführungsbeispiel des auszutauschenden bzw. einzusetzenden Feldgeräts 10, 12 schematisch dargestellt. Das auszutauschende bzw. einzusetzende Feldgerät 10, 12 weist gemäß dem ersten Ausführungsbeispiel ein Austauschmerkmal 16 auf, mit dem eine Identifikation des auszutauschenden bzw. einzusetzenden Feldgeräts 10, 12 möglich ist. Das Austauschmerkmal 16 umfasst gemäß einer Ausführungsform ein RFID-Etikett, sodass Daten drahtlos von dem Austauschmerkmal 16 zu dem Austauschsignalgeber 14 übertragen werden können, woraufhin dann das Austausch-Signal AS erzeugt wird. Ferner kann das auszutauschende bzw. einzusetzende Feldgerät 10, 12 einen Speicher 32 aufweisen, in dem der Konfigurations-Datensatz KD des auszutauschenden bzw. einzusetzenden Feldgeräts 10, 12 abgespeichert werden kann.

In Figur 3 ist ein zweites Ausführungsbeispiel des auszutauschenden bzw. einzusetzenden Feldgeräts 10, 12 schematisch dargestellt. Das auszutauschende bzw. einzusetzende Feldgerät 10, 12 weist ein Sensorelement 30 auf, dessen Betätigung das Austausch-Signal AS erzeugt. Das Sensorelement 30 umfasst gemäß einer Ausführungsform einen Magnetschalter, sodass eine berührungslose Betätigung des Sensorelements 30 durch Annäherung des Austauschsignalgebers 14 an das auszutauschende Feldgerät 10 möglich ist. Ferner kann das auszutauschende bzw. einzusetzende Feldgerät 10, 12 ebenfalls den Speicher 32 aufweisen, in dem der Konfigurations-Datensatz KD des auszutauschenden bzw. einzusetzenden Feldgeräts 10, 12 abgespeichert werden kann.

In Figur 4 ist der Austauschsignalgeber 14 schematisch dargestellt. Der Austauschsignalgeber 14 weist optional eine Schnittstelle 22 auf. Die Schnittstelle 22 ist kompatibel zu der Datenübertragungsverbindung 6 zwischen der Steuereinheit 4 und dem auszutauschenden Feldgerät 10 ausgebildet. Die Datenübertragungsverbindung 6 kann ein Feldbus sein und die Schnittstelle 22 kann zur Nahfeldkommunikation (Near Field Communication - NFC) gemäß dem Technologiestandard ISO/IEC 14643 A, ISO/IEC 14643 B, ISO 18092 ausgebildet, die es zwei Geräten ermöglicht, über eine kurze Distanz (bis ca. 10 cm) Daten und/oder Programme zu übertragen. Die Übertragung kann dabei uni- oder bidirektional erfolgen. Somit kann das auszutauschende bzw. einzusetzende Feldgerät 10, 12 gemäß dem NFC-Standard kommunizieren, und die Feldgeräte 10, 12 und die Steuereinheit 4 kommunizieren über den Feldbus. So können Daten und/oder Signale von dem Austauschsignalgeber 14 über das auszutauschende bzw. einzusetzende Feldgerät 10, 12 in die Datenübertragungsverbindung 6 eingespeist und/oder ausgelesen werden, wobei die Daten und/oder Signale über eine Kommunikationsverbindung 36 übertragen werden. Dabei kann z.B. das auszutauschende bzw. einzusetzende Feldgerät 10, 12 die Daten und/oder Signale weiterverarbeiten, z.B. indem es die Daten und/oder Signale vom dem auszutauschenden bzw. einzusetzenden Feldgerät 10, 12 übersetzt und dann an die Steuereinheit 4 weiterleitet. Alternativ sind die Schnittstelle 22 und die Datenaustauschverbindung 6 kompatibel zueinander ausgebildet, so dass eine Übersetzung der Daten und/oder Signale durch das auszutauschende bzw. einzusetzende Feldgerät 10, 12 nicht erforderlich ist. Als Protokoll kann z.B. Bluetooth, NFC oder WiFi verwendet werden. Ferner kann die Schnittstelle 22 zur drahtgebunden, drahtlosen- oder lichtwellenleitergebunden Datenübertragung ausgebildet sein. Alternativ oder zusätzlich kann die Schnittstelle 22 ausgebildet sein, einen Kommunikationskanal 20 aufzubauen, der eine datenübertragende Verbindung zwischen dem Austauschsignalgeber 14 und der Steuereinheit 4 bildet. Auch hier kann als Protokoll z.B. Bluetooth, NFC oder WiFi verwendet werden. Ferner kann auch hier die Schnittstelle 22 zur drahtgebunden, drahtlosen- oder lichtwellenleitergebunden Datenübertragung ausgebildet sein.

Analog zu dem in Figur 2 gezeigten Feldgerät 10, 12 mit dem Austauschmerkmal 16 kann der Austauschsignalgeber 14 in Figur 4 eine Ausleseeinheit 18 aufweisen. Die Ausleseeinheit 18 kann analog als RFID-Ausleseeinheit ausgebildet sein. Ferner kann analog zu dem in Figur 3 gezeigten Feldgerät 10, 12 mit dem Sensorelement 30 der Austauschsignalgeber 14 in Figur 4 ein Schalterbetätigungselement 34 aufweisen. Das Schalterbetätigungselement 34 kann analog zum Magnetschalter als Dauermagnet ausgebildet sein. Der Austauschsignalgeber 14 in Figur 4 weist ferner optional einen Speicher 26 auf, in dem der Konfigurations-Datensatz KD des auszutauschenden bzw. einzusetzenden Feldgeräts 10, 12 zwischengespeichert werden kann.

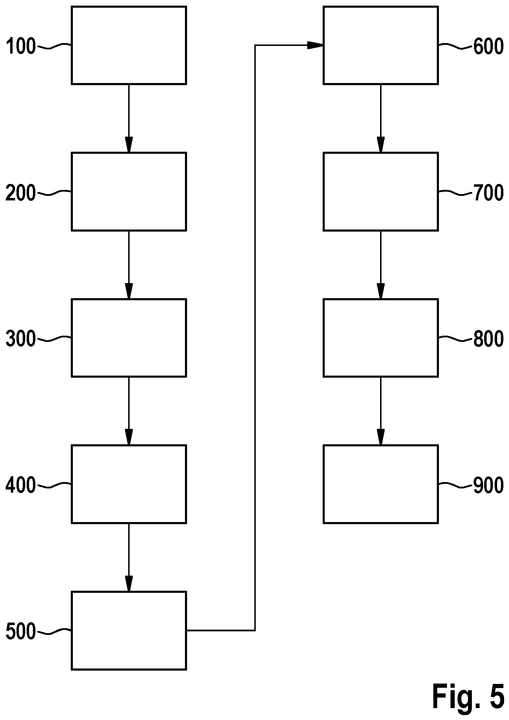

Es wird nun anhand der Figur 5 zusammen mit den Figuren 1 bis 4 der Austausch des defekten Feldgeräts 10 durch ein funktionsfähiges Feldgerät 12 erläutert.

In einem ersten Schritt 100 wird der bevorstehende Austausch des defekten Feldgeräts 100 erfasst und das defekte Feldgerät 10 identifiziert.

Hierzu hält z.B. ein Techniker den Austauschsignalgeber 14 an das defekte und daher auszutauschende Feldgerät 10. Hierdurch wird durch das Sensorelement 30 das Austausch-Signal AS erzeugt. Optional kann hierauf das auszutauschende Feldgerät 10 das Erzeugen des Austausch-Signals AS betätigen, z.B. durch ein optisches Signal, z.B. erzeugt mittels einer LED (nicht dargestellt) des auszutauschenden Feldgeräts 10.

Der erste Schritt 100 kann drei Unterschritte umfassen:
1. Identifizierung des auszutauschenden Feldgeräts 10,
2. Übermittelung eines Identifikations-Datensatzes ID zur Geräteidentifikation an die Steuereinheit 4, und
3. Erzeugen eines Feedback-Signals FS durch die Steuereinheit 4.

Gemäß einem ersten Ausführungsbeispiel kann der erste Unterschritt umfassen, dass der Austauschsignalgeber 14 das Austauschmerkmal 16 des auszutauschenden Feldgeräts 10 ausliest. Z.B. kann das auszutauschende Feldgerät 10 mit einem RFID-Etikett versehen sein und der Austauschsignalgeber 14 weist eine RFID-Ausleseeinheit auf.

Gemäß einem zweiten Ausführungsbeispiel kann der erste Unterschritt umfassen, dass das auszutauschende Feldgerät 10 das Sensorelement 30 aufweist, mit dem das Austauschsignal AS von dem auszutauschenden Feldgerät 10 erfasst wird. Z.B. kann das Austauschsignal AS ein Magnetfeld, ein elektrisches Feld, ein elektro-magnetisches Feld, ein auf einer Unterbrechung einer Lichtschranke beruhendes Signal, oder ein Drucksignal hervorrufende Kraft sein.

Gemäß einem dritten Ausführungsbeispiel kann der erste Unterschritt umfassen, dass das Austauschsignal AS von dem Austauschsignalgeber 14 zu dem auszutauschenden Feldgerät 10 übertragen wird. Z.B. kann hierzu eine Kommunikationsverbindung 36 verwendet werden, die bidirektional ausgebildet sein kann.

Ist das auszutauschende Feldgerät 10 identifiziert, wird daraufhin der Identifikations-Datensatz ID zur Identifikation des auszutauschenden Feldgeräts 10 zu der Steuereinheit 4 übertragen.

Gemäß einem ersten Ausführungsbeispiel kann der zweite Unterschritt umfassen, dass auf Empfang des Austauschsignals AS das auszutauschende Feldgerät 10 den Identifikations-Datensatz ID des auszutauschenden Feldgeräts 10 zu der Steuereinheit 4 überträgt. Hierzu kann z.B. die Datenaustauschverbindung 6 verwendet werden. Somit informiert das auszutauschende Feldgerät 10 die Steuereinheit 4, dass ein Austausch bevorsteht. Dieses Ausführungsbeispiel ist besonders dann effizient, wenn der erste Unterschritt gemäß dem zweiten oder dritten Ausführungsbeispiel durchgeführt wurde.

Gemäß einem zweiten Ausführungsbeispiel kann der zweite Unterschritt umfassen, dass die Steuereinheit 4 in Intervallen überprüft, ob ein Austauschsignal AS vorliegt, und auf Vorliegen des Austauschsignals AS hin der Identifikations-Datensatz ID des auszutauschenden Feldgeräts 10 zu der Steuereinheit 4 übertragen wird. Hierzu kann z.B. die Datenaustauschverbindung 6 verwendet werden.

Gemäß einem dritten Ausführungsbeispiel kann der zweite Unterschritt umfassen, dass ein Identifikations-Datensatz ID des auszutauschenden Feldgeräts 10 mittels des Kommunikationskanals 20 zu der Steuereinheit 4 übertragen wird. Somit wird die Datenaustauschverbindung 6 nicht mit der Übertragung des Identifikations-Datensatzes ID belastet.

Gemäß einem vierten Ausführungsbeispiel kann der zweite Unterschritt umfassen, dass der Identifikations-Datensatz ID des auszutauschenden Feldgeräts 10 über die Schnittstelle 22 und die Kommunikationsverbindung 36 zu dem auszutauschenden Feldgerät 10 übertragen wird. Anschließend wird der Identifikations-Datensatz ID über die Datenaustauschverbindung 6 zu der Steuereinheit 4 übertragen.

Nachdem der Identifikations-Datensatz ID vorliegt, kann die Steuereinheit optional nun das Feedback-Signal FS erzeugen.

Gemäß einem ersten Ausführungsbeispiel kann der dritte Unterschritt umfassen, dass die Steuereinheit 4 das Feedback-Signals FS an das auszutauschende Feldgerät 10 überträgt. Auf Empfang des Feedback-Signals FS hin informiert das auszutauschende Feldgerät 10, z.B. durch eine optische Anzeige und/oder akustische Mitteilung, dass das Feedback-Signal FS vorliegt.

Gemäß einem zweiten Ausführungsbeispiel kann der dritte Unterschritt umfassen, dass die Steuereinheit 4 das Feedback-Signal FS über den Kommunikationskanal 20 zu dem Austauschsignalgeber 14 überträgt. Somit wird die Datenaustauschverbindung 6 nicht mit der Übertragung des Feedback-Signals FS belastet.

Gemäß einem dritten Ausführungsbeispiel kann der dritte Unterschritt umfassen, dass das auszutauschende Feldgerät 10 das Feedback-Signal FS zu dem Austauschsignalgeber 14 überträgt. Z.B. kann das Feedback-Signal FS von einem Techniker nicht wahrnehmbar sein und wird vom Austauschsignalgeber 14 wiedergegeben. Hierzu verstärkt der Austauschsignalgeber 14 das Feedback-Signal FS oder wandelt es um, z.B. Ultraschall in Schall.

Gemäß einem vierten Ausführungsbeispiel kann der dritte Unterschritt umfassen, dass das Feedback-Signal FS über die Schnittstelle 22 und die Kommunikationsverbindung 36 zu dem auszutauschenden Feldgerät 10 übertragen wird.

Bei dem dritten und/oder vierten Ausführungsbeispiel kann vorgesehen sein, dass Daten und/oder Signale, wie z.B. IP-Nachrichten, an das auszutauschende Feldgerät 10 weitergeleitet werden.

In einem weiteren, optionalen Schritt 200 erfolgt eine Sicherung der Konfiguration des auszutauschenden Feldgeräts 10. Hierzu wird der Konfigurations-Datensatz KD aus dem Speicher 32 des auszutauschenden Feldgeräts 10 ausgelesen und in dem Speicher 24 der Steuereinheit 4 oder in dem Speicher 26 des Austauschsignalgebers 14 zwischengespeichert. Somit umfasst der Schritt 200 zwei Teilschritte, nämlich das Auslesen und das Übertragen und Zwischenspeichern des Konfigurations-Datensatzes KD. Das Übertragen und Zwischenspeichern des Konfigurations-Datensatzes KD kann umfassen, dass der Konfigurations-Datensatz KD von dem auszutauschenden Feldgerät 10 über die Datenaustauschverbindung 6 zu der Steuereinheit 4 übertragen wird, oder dass der Austauschsignalgeber 14 den Konfigurations-Datensatz KD ausliest und über den Kommunikationskanal 20 zu der Steuereinheit 4 überträgt. Alternativ kann der Konfigurations-Datensatzes KD auch in der Steuereinheit 22 des Austauschsignalgebers 14 zwischengespeichert werden, sodass eine Übertragung zu der Steuereinheit 4 entfällt. Ferner kann ein Auslesen des Konfigurations-Datensatzes KD durch den Austauschsignalgeber 14 erst nach dem Trennen des auszutauschenden Feldgeräts 10 von der Prozesseinrichtung 2 erfolgen.

In einem weiteren Schritt 300 bewirkt die Steuereinheit 4 Schritte, um das auszutauschende Feldgerät 10 sicher und mit minimalen Auswirkungen auf die Prozesseinrichtung 2 entfernen zu können. Hierzu wird durch zumindest ein Trennelement 28 die Datenaustauschverbindung 6 aufgetrennt. Bei einer Ringverkabelung werden die Trennelemente 28 so ausgewählt, dass nur die kleinste Gruppe von Feldgeräten 8 von der Datenaustauschverbindung 6 getrennt sind. Wenn die Datenaustauschverbindung 8 zusätzlich zur Versorgung von Feldgeräten 8 mit elektrischer Energie ausgebildet ist, wird auch die Energieversorgung unterbrochen. Im Falle einer Verkabelung in Linie sind in Datenübertragungsrichtung nur die Feldgeräte 8 hinter dem auszutauschenden Feldgerät 10 von der Datenaustauschverbindung 6 aufgrund eines aktivierten Trennelements 28 abgetrennt. Ferner kann vorgesehen sein, dass die Steuereinheit 4 eine Nachricht erzeugt und an die Feldgeräte versendet, z.B. über einen Bus, dass sie zeitweise durch Abschalten deaktiviert werden.

In einem weiteren Schritt 400 wird dem Techniker mitgeteilt, dass alle Vorbereitungen für das Entfernen des auszutauschenden Feldgeräts 10 erfüllt sind. Hierzu wird ein Vorbereitungsabschluss-Signal VS erzeugt. Hierbei kann analog zu dem dritten Unterschritts des ersten Schritts 100 vorgegangen werden, wenn das auszutauschende Feldgerät 10 nicht durch Abschalten deaktiviert ist.

So kann die Steuereinheit 4 das Vorbereitungsabschluss-Signal VS an das auszutauschende Feldgerät 10 übertragen, z.B. über die Datenaustauschverbindung 6. Auf Empfang des Vorbereitungsabschluss-Signals VS hin informiert das Feldgerät 10 den Techniker, z.B. durch eine optische Anzeige und/oder akustische Mitteilung, dass das Vorbereitungsabschluss-Signal VS vorliegt.

Ferner kann die Steuereinheit 4 das Vorbereitungsabschluss-Signal VS über den Kommunikationskanal 20 zu dem Austauschsignalgeber 14 übertragen. Somit wird die Datenaustauschverbindung 6 nicht mit der Übertragung des Vorbereitungsabschluss-Signals VS belastet.

Des Weiteren kann das auszutauschende Feldgerät 10 das Vorbereitungsabschluss-Signal VS zu dem Austauschsignalgeber 14 übertragen. Z.B. kann das Vorbereitungsabschluss-Signal VS von einem Techniker nicht wahrnehmbar sein und wird vom Austauschsignalgeber 14 wiedergegeben. Hierzu verstärkt der Austauschsignalgeber 14 das Vorbereitungsabschluss-Signal VS oder wandelt es um, z.B. Ultraschall in Schall. Ferner kann vorgesehen sein, dass das auszutauschende bzw. einzusetzende Feldgerät 10, 12 das Vorbereitungsabschluss-Signal VS weiterverarbeitet, z.B. in dem 10 das Vorbereitungsabschluss-Signal VS vom dem auszutauschenden bzw. einzusetzenden Feldgerät 10, 12 übersetzt und dann an das Steuereinheit 4 weitergeleitet wird.

Schließlich kann das Vorbereitungsabschluss-Signal VS über die Schnittstelle 22 und die Kommunikationsverbindung 36 zu dem auszutauschenden Feldgerät 10 übertragen werden.

Wenn hingegen das auszutauschende Feldgerät 10 stromlos ist, kann die Steuereinheit 4 über den Kommunikationskanal 20 mit dem Austauschsignalgeber 14 Daten und/oder Signale austauschen. Alternativ kann das auszutauschende Feldgerät 10 durch ein bei Stromlosigkeit erlöschendes Signals ein Feedback geben.

Dies Feedback kann z.B. von dem auszutauschenden Feldgerät 10 zu dem Austauschsignalgeber 14 übertragen werden. Z.B. kann das Signal von einem Techniker nicht wahrnehmbar sein und wird vom Austauschsignalgeber 14 wiedergegeben. Hierzu verstärkt der Austauschsignalgeber 14 das Signal oder wandelt es um, z.B. Ultraschall in Schall. Ferner kann vorgesehen sein, dass das auszutauschende bzw. einzusetzende Feldgerät 10, 12 das Signal weiterverarbeitet, z.B. in dem 10 das Signal vom dem auszutauschenden bzw. einzusetzenden Feldgerät 10, 12 übersetzt und dann an das Steuereinheit 4 weitergeleitet wird.

In einem weiteren Schritt 500 erfolgt der Austausch des auszutauschenden Feldgeräts 10 durch das einzusetzende Feldgerät 12.

In einem weiteren Schritt 600 wird der erfolgte Austausch der Feldgeräte 10, 12 erfasst. Hierzu wird eine Mitteilung MT erzeugt, z.B. von dem eingesetzten Feldgerät 12.

Gemäß einem ersten Ausführungsbeispiel kann die Mitteilung MT mittels des Kommunikationskanals 20 von dem eingesetzten Feldgerät 12 zu der Steuereinheit 4 übertragen werden. Somit wird die Datenaustauschverbindung 6 nicht mit der Übertragung der Mitteilung MT belastet. Optional kann die Mitteilung MT Daten zur Identifikation des neuen Feldgeräts 12 aufweisen.

Gemäß einem zweiten Ausführungsbeispiel kann die Steuereinheit 4 in Intervallen versuchen, das neue Feldgerät 12 anzusprechen, das eingesetzte Feldgerät 12 mit elektrischer Energie zu versorgen und die Leistungsaufnahme des neuen Feldgeräts 12 zu erfassen, oder Kommunikationscharakteristika der Datenaustauschverbindung 6 dahingehend auszuwerten, ob das eingesetzte Feldgerät 12 angeschlossen wurde, z.B. weil sich ein Stromkreis einer Ringverkabelung schließt oder die Übertragungsqualität der Datenaustauschverbindung 6 aufgrund des eingesetzten Feldgeräts 12 sich verschlechtert.

Gemäß einem dritten Ausführungsbeispiel kann das eingesetzte Feldgerät 12 an die Steuereinheit 12 die Mittteilung MT übermitteln, wenn das eingesetzte Feldgerät 12 an die Prozesseinrichtung 2 angeschlossen wurde. Hierzu ist Voraussetzung, dass das eingesetzte Feldgerät 12 mit elektrischer Energie versorgt wird.

Gemäß einem vierten Ausführungsbeispiel überträgt das eingesetzte Feldgerät 12 die Mitteilung MT zu dem Austauschsignalgeber 14. Der Austauschsignalgeber 14 überträgt dann die Mitteilung MT über den Kommunikationskanal 20 zu der Steuereinheit 4. Dies ist sinnvoll, wenn das eingesetzte Feldgerät 12 zwar mit elektrischer Energie versorgt werden kann, diese jedoch nicht ausreicht, um rückwirkungsfrei mit der Steuereinheit 4 Daten und/oder Signale auszutauschen, da für eine gleichzeitigen Datenaustauch mit mehreren Feldgeräten 8 die elektrische Energie nicht ausreichend ist.

In einem weiteren Schritt 700 wird das eingesetzte Feldgerät 12 sowie alle anderen deaktivierten Feldgeräte 8 wieder in einen kommunikationsfähigen Zustand versetzt. Hierzu wird auf die Mitteilung MT hin die aufgetrennte Datenaustauschverbindung 6 wieder datenübertragend verbunden. Dazu werden von der Steuereinheit 4 vorher die im Schritt 300 geöffneten Trennelemente 28 durch Ansteuersignale wieder geschlossen.

In einem weiteren Schritt 800 werden die Konfiguration wiederhergestellt. Hierzu wird der Konfigurations-Datensatz KD aus dem Speicher 26 des Austauschsignalgebers 14 oder aus dem Speicher 24 der Steuereinheit 4 ausgelesen und in dem Speicher 32 des eingesetzten Feldgeräts 12 gespeichert. Zur Übertragung des Konfigurations-Datensatzes KD kann die Datenaustauschverbindung 6 und die Schnittstelle 22 mit der Kommunikationsverbindung 36 oder der Kommunikationskanal 20 verwendet werden.

In einem weiteren Schritt 900 wird der erfolgte Abschluss des Austauschs angezeigt. Hierzu überträgt die Steuereinheit 4 ein Abschluss-Signal AB an das eingesetzte Feldgerät 12, z.B. mittels Datenaustauschverbindung 6. Auf Empfang des Abschluss-Signals AB hin informiert das eingesetzte Feldgerät 12, z.B. durch eine optische Anzeige und/oder akustische Mitteilung, dass das Abschluss-Signal AB vorliegt. Ferner kann die Steuereinheit 4 das Abschluss-Signal AB über den Kommunikationskanal 20 zu dem Austauschsignalgeber 14 übertragen. Somit wird die Datenaustauschverbindung 6 nicht mit der Übertragung des Abschluss-Signals AB belastet. Des Weiteren kann das eingesetzte Feldgerät 12 das Abschluss-Signal AB zu dem Austauschsignalgeber 14 übertragen. Z.B. kann das Abschluss-Signal AB von einem Techniker nicht wahrnehmbar sein und wird vom Austauschsignalgeber 14 wiedergegeben. Hierzu verstärkt der Austauschsignalgeber 14 das Abschluss-Signal AB oder wandelt es um, z.B. Ultraschall in Schall. Schließlich kann das Abschluss-Signal AB über die Schnittstelle 22 mit der Kommunikationsverbindung 36 zu dem eingesetzten Feldgerät 12 übertragen werden.

Somit wird angezeigt, dass das defekte Feldgerät 10 gegen ein neues, funktionsfähiges Feldgerät 12 ausgetauscht wurde und die Prozesseinrichtung 2 wieder in vollen Umfang funktionsfähig ist.

## Patentansprüche

1. Verfahren zum Betreiben einer Prozesseinrichtung (2) mit einer Steuereinheit (4) und zumindest einem mit der Steuereinheit (4) zum Datenaustausch mittels einer Datenaustauschverbindung (6) verbundenen Feldgerät (8, 10, 12), **gekennzeichnet dadurch, dass** bevor ein auszutauschendes Feldgerät (10) durch ein anderes, einzusetzendes Feldgerät (12) ersetzt wird, die folgenden Schritte ausgeführt werden:
Annähern eines Austauschsignalgebers (14) an das auszutauschende Feldgerät (10),
Erzeugen eines Austauschsignals (AS) mittels des Austauschsignalgebers (14), und
Übertragen des Austauschsignals (AS) zu der Steuereinheit (4).

2. Verfahren nach Anspruch 1, bei dem ein Identifizierungsmerkmal (16) des auszutauschenden Feldgeräts (10) erfasst wird, und auf das Erfassen des Identifizierungsmerkmals (16) hin das Austauschsignal (AS) erzeugt wird.

3. Verfahren nach Anspruch 1, bei dem das Austauschsignal (AS) von dem Austauschsignalgeber (14) zu dem auszutauschenden Feldgerät (10) übertragen wird, und von dem auszutauschenden Feldgerät (10) zu der Steuereinheit (4) übertragen wird.

4. Verfahren nach Anspruch 1, bei dem das auszutauschende Feldgerät (10) einen Sensor (30) aufweist, mit dem das Austauschsignal (AS) erfasst wird.

5. Verfahren nach einem der vorstehenden Ansprüche, bei dem auf Vorliegen des Austauschsignals (AS) hin ein Identifikations-Datensatz (ID) des auszutauschenden Feldgeräts (10) zu der Steuereinheit (4) übertragen wird.

6. Verfahren nach Anspruch 5, bei dem auf Vorliegen des Identifikations-Datensatz (ID) hin zumindest durch ein Trennelement (28) die Datenaustauschverbindung (6) aufgetrennt wird.

7. Verfahren nach Anspruch 6, bei dem ein Austausch des auszutauschenden Feldgeräts (10) durch das andere, einzusetzende Feldgerät (12) erfasst und daraufhin eine Mitteilung (MT) erzeugt wird, und auf die Mitteilung (MT) hin die aufgetrennte Datenaustauschverbindung (6) wieder datenübertragend verbunden wird.

8. Verfahren nach einem der vorstehenden Ansprüche, bei dem auf Vorliegen des Austauschsignals (AS) hin ein Feedback-Signal (FS) erzeugt wird.

9. Verfahren nach einem der vorstehenden Ansprüche, bei dem ein Konfigurations-Datensatz (KD) aus einem Speicher (32) des auszutauschenden Feldgeräts (10) ausgelesen und in einem Speicher (24) der Steuereinheit (4) oder in einem Speicher (26) des Austauschsignalgebers (14) zwischengespeichert wird.

10. Verfahren nach einem der vorstehenden Ansprüche, bei dem ein Vorbereitungsabschluss-Signal (VS) erzeugt wird, wenn die Prozesseinrichtung (2) auf ein Ersetzen des auszutauschenden Feldgeräts (10) durch das einzusetzende Feldgerät (12) vorbereitet ist.

11. Anordnung aus einem Austauschsignalgeber (14) und einer Prozesseinrichtung (2) mit einer Steuereinheit (4) und zumindest einem mit der Steuereinheit (4) zum Datenaustausch mittels einer Datenaustauschverbindung (6) verbundenen Feldgerät (8, 10, 12), die dazu eingerichtet ist, ein Verfahren nach einem der vorstehenden Ansprüche durchzuführen.

12. Computerprogramm mit Programmcodemitteln, die eine Recheneinheit dazu veranlassen, ein Verfahren nach einem der Ansprüche 1 bis 10 durchzuführen, wenn sie auf der Recheneinheit ausgeführt werden.

13. Maschinenlesbares Speichermedium mit einem darauf gespeicherten Computerprogramm nach Anspruch 12.

## Claims

1. Method for operating a processing device (2) with a control unit (4) and at least one field device (8, 10, 12) connected to the control unit (4) for data exchange by means of a data exchange link (6), **characterized in that** a field device (10) to be exchanged is replaced by another field device (12) to be inserted, the following steps are executed:
bringing an exchange signal generator (14) close to the field device (10) to be exchanged,
generating an exchange signal (AS) by means of the exchange signal generator (14), and
transmitting the exchange signal (AS) to the control unit (4).

2. Method according to Claim 1, in which an identification feature (16) of the field device (10) to be exchanged is detected and, following the detection of the identification feature (16), the exchange signal (AS) is generated.

3. Method according to Claim 1, in which the exchange signal (AS) is transmitted from the exchange signal generator (14) to the field device (10) to be exchanged, and transmitted to the control unit (4) from the field device (10) to be exchanged.

4. Method according to Claim 1, in which the field device (10) to be exchanged has a sensor (30) by means of which the exchange signal (AS) is detected.

5. Method according to one of the preceding claims, in which, following the presence of the exchange signal (AS), an identification record (ID) of the field device (10) to be exchanged is transmitted to the control unit (4).

6. Method according to Claim 5, in which, following the presence of the identification record (ID), the data exchange link (6) is split open by at least one separating element (28).

7. Method according to Claim 6, in which an exchange of the field device (10) to be exchanged is detected by the other field device (12) to be inserted and, thereupon, a message (MT) is generated and, following the message (MT), the data exchange link (6) split open is again connected in a data-transmitting manner.

8. Method according to one of the preceding claims, in which, following the presence of the exchange signal (AS), a feedback signal (FS) is generated.

9. The method according to one of the preceding claims, in which a configuration record (KD) is read out of a memory (32) of the field device (10) to be exchanged and temporarily stored in a memory (24) of the control unit (4) or in a memory (26) of the exchange signal generator (14).

10. Method according to one of the preceding claims, in which a preparation termination signal (VS) is generated when the processing device (2) is prepared for replacing the field device (10) to be exchanged with the field device (12) to be inserted.

11. Arrangement consisting of on exchange signal generator (14) and a processing device (2) with a control unit (4) and at least one field device (8, 10, 12) connected to the control unit (4) for data exchange by means of a data exchange link (6), which is configured to perform a method according to one of the preceding claims.

12. Computer program with program code means which cause a computing unit to perform a method according to one of Claims 1 to 10 when they are executed on the computing unit.

13. Machine-readable storage medium with a computer program according to Claim 12, stored thereon.

## Revendications

1. Procédé pour faire fonctionner un dispositif de processus (2) comprenant une unité de commande (4) et au moins un appareil de terrain (8, 10, 12) relié à l'unité de commande (4) en vue de l'échange de données au moyen d'une liaison d'échange de données (6), **caractérisé en ce qu'**avant qu'un appareil de terrain (10) à échanger soit remplacé par un autre appareil de terrain (12) à utiliser, les étapes suivantes sont exécutées : approche d'un transmetteur de signal d'échange (14) de l'appareil de terrain (10) à échanger, génération d'un signal d'échange (AS) au moyen du transmetteur de signal d'échange (14), et transmission du signal d'échange (AS) à l'unité de commande (4).

2. Procédé selon la revendication 1, avec lequel une caractéristique d'identification (16) de l'appareil de terrain (10) à échanger est acquise, et le signal d'échange (AS) est généré sur l'acquisition de la caractéristique d'identification (16).

3. Procédé selon la revendication 1, avec lequel le signal d'échange (AS) est transmis du transmetteur de signal d'échange (14) à l'appareil de terrain (10) à échanger, et transmis de l'appareil de terrain (10) à échanger à l'unité de commande (4).

4. Procédé selon la revendication 1, avec lequel l'appareil de terrain (10) à échanger possède un capteur (30) avec lequel est acquis le signal d'échange (AS).

5. Procédé selon l'une des revendications précédentes, avec lequel, en présence du signal d'échange (AS), un jeu de données d'identification (ID) de l'appareil de terrain (10) à échanger est transmis à l'unité de commande (4).

6. Procédé selon la revendication 5, avec lequel, en présence du jeu de données d'identification (ID), la liaison d'échange de données (6) est déconnectée au moins par un élément de séparation (28).

7. Procédé selon la revendication 6, avec lequel un échange de l'appareil de terrain (10) à échanger par l'autre appareil de terrain (12) à utiliser est détecté et une notification (MT) est alors générée, puis la liaison d'échange de données (6) déconnectée est de nouveau reliée en transmission de données en présence de la notification (MT).

8. Procédé selon l'une des revendications précédentes, avec lequel un signal de rétroaction (FS) est généré en présence du signal d'échange (AS).

9. Procédé selon l'une des revendications précédentes, avec lequel un jeu de données de configuration (KD) est lu depuis une mémoire (32) de l'appareil de terrain (10) à échanger et mémorisé temporairement dans une mémoire (24) de l'unité de commande (4) ou dans une mémoire (26) du transmetteur de signal d'échange (14).

10. Procédé selon l'une des revendications précédentes, avec lequel un signal d'achèvement de préparation (VS) est généré lorsque le dispositif de processus (2) est préparé pour un remplacement de l'appareil de terrain (10) à échanger par l'appareil de terrain (12) à utiliser.

11. Arrangement composé d'un transmetteur de signal d'échange (14) et d'un dispositif de processus (2) comprenant une unité de commande (4) et au moins un appareil de terrain (8, 10, 12), relié à l'unité de commande (4) en vue de l'échange de données au moyen d'une liaison d'échange de données (6) et conçu pour mettre en oeuvre un procédé selon l'une des revendications précédentes.

12. Programme informatique comprenant des moyens de code de programme qui amènent une unité de calcul à mettre en oeuvre un procédé selon l'une des revendications 1 à 10 lorsqu'ils sont exécutés sur l'unité de calcul.

13. Support d'enregistrement lisible par machine sur lequel est enregistré un programme informatique selon la revendication 12.
